# EUROPÄISCHE PATENTSCHRIFT

(11) **EP 1 315 272 B1**
(45) Veröffentlichungstag und Bekanntmachung des Hinweises auf die Patenterteilung: **13.01.2010**
(21) Anmeldenummer: 02018037.8
(22) Anmeldetag: 13.08.2002
(51) Int. Cl.: H02K 11/00, H02K 5/128, F04D 13/06

(54) **Spaltrohrpumpe mit Temperatursensor**
Canned pump with temperature sensor
Pompe à tube d'entrefer avec capteur de température

(30) Priorität: 23.11.2001 DE 10157194
(43) Veröffentlichungstag der Anmeldung: 28.05.2003
(73) Patentinhaber: WILO SE, 44263 Dortmund (DE)
(72) Erfinder: Karns, Stephan, 59348 Lüdinghausen (DE); Soyubey, Ismet Sacid, 59425 Unna (DE); Kiffer, Björn, 44139 Dortmund (DE)
(74) Vertreter: COHAUSZ DAWIDOWICZ HANNIG & SOZIEN

(56) Entgegenhaltungen:
- EP-A- 0 711 019
- EP-A- 0 860 611
- DE-U1- 9 320 524
- DE-U1- 29 709 007
- US-A- 5 525 039

## Beschreibung

Die Erfindung betrifft eine Spaltrohrpumpe oder Spalttopfpumpe mit einem die Pumpe antreibenden Elektromotor, bei der ein Spaltrohr bzw. ein Spalttopf den Naßraum mit dem in der geförderten Flüssigkeit umlaufenden Rotor von dem den Stator enthaltenden trockenen Statorraum trennt, wobei in dem Statorraum an dem Spaltrohr bzw. an dem Spalttopf ein Sensor zur Erfassung von Betriebsparametern der Pumpe, insbesondere zur Erfassung der Temperatur der geförderten Flüssigkeit, vorgesehen ist.

Derartige Spaltrohrpumpen sind allgemein bekannt. So zeigt beispielsweise die deutsche Offenlegungsschrift DE 44 38 132 A1 eine Spaltrohrpumpe, bei der das Spaltrohr an dem der Pumpe zugewandten Ende einen Kragen aufweist, an dessen der Pumpe abgewandten Seite ein Sensorelement, insbesondere ein Temperatursensor, angeordnet ist. Da die den Motor steuernde Elektronik und/oder die Anschlüsse an externe Steuer- oder Regeleinrichtungen üblicherweise an dem der Pumpe abgewandten Ende des Spaltrohres im Motorgehäuse angeordnet sind, ist die Anordnung eines Sensors am gegenüberliegenden und der Pumpe zugewandten Ende des Spaltrohres mit dem Nachteil verbunden, daß zusätzliche elektrische Verbindungskabel erforderlich sind, die den Sensor am Stator vorbei mit der Motorelektronik verbinden. Die Verbindungskabel können sich bei einer Erhöhung der Temperatur der geförderten Flüssigkeit erwärmen, wodurch sich der ohmsche Widerstand der Kabel ändern und ein Meßergebnis verfälscht werden kann. Auch können aufgrund der im Bereich des Stators bzw. Rotors umlaufenden Magnetfelder elektrische Ströme in den Kabeln induziert werden, die ebenfalls zu einer Verfälschung des Meßergebnisses führen können.

Um derartige Verfälschungen auszuschließen, sollten die Verbindungskabel möglichst kurz ausgeführt sein und nicht im Bereich des Stators bzw. Rotors verlaufen. Als diesbezüglich optimale Position kommt daher der hintere Bereich, d.h. das der Pumpe abgewandte Ende des Spaltrohrs, in Betracht. Hier kann der Sensor mit kurzen Kabelwegen in unmittelbarer Nähe zur Motorelektronik angeordnet werden. Jedoch ergeben sich hier aufgrund der schwierigen oder je nach Montageverfahren sogar unmöglichen Zugänglichkeit dieses Spalttopfbereiches in dem Motorgehäuse Probleme bei der Montage des Sensors. Insbesondere bei an dieser Seite mit einem Boden vollständig oder überwiegend geschlossenen Motorgehäusen kann der Sensor nach dem Einbringen des Spaltrohres allenfalls mit großem technischen Aufwand in seine an dem Spaltrohr anliegende Betriebsposition gebracht werden. Diese Montageprobleme treten in umso stärkerem Maße auf, je kleiner die Spaltrohrpumpe ausgeführt ist.

Aus der DE 93 20 524 U1 ist es bekannt, am Spaltrohrtopf einen Aufnehmer als Sensor anzuordnen, der die Rotordrehstellung erfasst. Ferner ist aus der US-A 5 525 039 ein Halteelement an sich bekannt. Bei beiden Schriften bestehen die o. g. Nachteile insbesondere eines nicht ausreichend sicheren Kontakts des Sensors am Spaltrohr beim Einsetzen des Spaltrohrs.

Aufgabe der vorliegenden Erfindung ist es daher, eine konstruktiv einfache und preiswert herzustellende Spaltrohrpumpe der eingangs genannten Art zu schaffen, bei der der Sensor insbesondere auch an schwer zugänglichen Stellen besonders leicht, schnell und schonend in seine Betriebsposition gebracht werden kann.

Diese Aufgabe wird erfindungsgemäß durch eine Spaltrohrpumpe nach Anspruch 1 gelöst. Bevorzugte Ausführungsformen und vorteilhafte Weiterbildungen ergeben sich aus den abhängigen Ansprüchen. Wesentlich bei der erfindungsgemäßen Lösung ist es, daß in dem Statorraum ein Halteelement vorgesehen ist, an dem der Sensor zwischen zwei Positionen verschwenkbar und/oder verschiebbar gelagert ist, wobei in einer ersten Position ein Abstand zwischen dem Sensor und dem Spaltrohr vorgesehen ist und wobei der Sensor in der zweiten Position an dem Spaltrohr anliegt.

Der Hauptvorteil besteht dabei darin, daß der Sensor nicht sofort in seiner endgültigen Betriebsposition montiert werden muß, sondern daß er sich in einer für die Montage vorteilhaften Montageposition befindet, aus der er anschließend in die endgültige Betriebsposition bewegt wird, bei der er am Spaltrohr bzw. am Spalttopf anliegt. Hierdurch kann die gesamte Montage der Spaltrohrpumpe erheblich vereinfacht und die dafür benötigte Zeit deutlich verkürzt werden. Auch wird der Sensor während der Montage der einzelnen Pumpenteile nicht beschädigt, da er erst nachträglich in seine Betriebsposition gebracht wird, bei der er Kontakt zum Spaltrohr hat. Auch kann hierdurch eine automatische Bewegung des Sensors aus der Montageposition in die Betriebsposition und somit eine besonders einfache Montage erreicht werden. Ferner wird ein sicherer Berührungskontakt erreicht.

Eine derartige Ausführungsform bringt die größten Vorteile dann, wenn der Sensor in schwer zugänglichen Positionen angeordnet ist. Die Vorteile einer einfachen, schnellen und schonenden Montage des Sensors können jedoch in gleicher Weise auch an jeder anderen Stelle des Spaltrohres genutzt werden.

Besonders vorteilhaft ist es, wenn der Sensor an einem Hebel angeordnet, insbesondere verklebt oder mittels Vergußmasse befestigt ist, der schwenkbar an dem Halteelement gelagert ist. Auf diese Weise können auch standardmäßig verfügbare Sensoren ohne erforderliche Veränderungen eingesetzt werden. Außerdem kann durch einen geeignet angeordneten Hebel der Sensor über eine relativ große Entfernung insbesondere in radialer Richtung bewegt werden.

Besonders vorteilhaft ist es ferner, wenn der Sensor zumindest im wesentlichen in einer die Motorachse enthaltenden radialen Ebene von außen gegen die Mantelfläche bzw. Außenwandung des Spaltrohres bewegbar ist. Hierdurch kann eine optimale Anlagefläche und somit ein bestmöglicher Kontakt zwischen dem Sensor und dem Spaltrohr erreicht werden. In anderen Ausführungsformen der Spaltrohrpumpe mit einem außen umlaufenden Rotor kann der Sensor jedoch auch so in dem innenliegenden trockenen Statorraum gelagert sein, daß er von innen gegen die Wandung des Spaltrohres bewegt werden kann.

Besonders große Vorteile bei der Montage der Spaltrohrpumpe können dann erreicht werden, wenn der Sensor an der der Pumpe abgewandten Stirnseite des Stators zwischen den Statorwicklungen und der Motorelektronik oder einer Schnittstelle zur Motorelektronik angeordnet ist.

Vorteilhaft ist es außerdem, wenn das Halteelement an einer Verteilerkappe, insbesondere an einer in einer Verteilerkappe aufgenommenen Leiterplatte, angeordnet ist, die als Trennung bzw. Schnittstelle zwischen den Statorwicklungen und der Motorelektronik vorgesehen ist. Eine derartige auch als Kammerblockkappe bezeichnete Verteilerkappe kann beispielsweise auf einer Seite Kontaktstecker zur Kontaktierung bzw. Verschaltung der einzelnen Wicklungen des Stators aufweisen und an der anderen Seite Kontaktbuchsen oder Stecker für die Verbindung der Statorwicklungen und insbesondere des Sensors zu einer Steuerelektronik oder Regelungseinheit haben.

Besonders vorteilhaft ist es hierbei, wenn die Betätigungsmittel ein im Bereich der Wandung des Spaltrohres verschiebbar und/oder verschwenkbar gelagertes Kontaktelement umfassen, das mit dem Spaltrohr beim Einbringen in das Motorgehäuse in Kontakt bringbar und von diesem verschiebbar bzw. verschwenkbar ist, wobei Übertragungsmittel zur Übertragung der Bewegung des Kontaktelementes auf eine Bewegung des Sensors vorgesehen sind. Die Übertragungsmittel können dabei vorzugsweise formschlüssig und/oder kraftschlüssig wirken und insbesondere Verbindungshebel oder Zugmittel, beispielsweise Drähte, Fäden oder Bänder sowie Zahnräder oder Zahnstangen, umfassen. Eine bei der Montage des Spaltrohres erfolgende Bewegung des Kontaktelementes führt auf diese Weise zu einer Verschwenkung bzw. Verschiebung des Sensors in seine endgültige Betriebsposition.

Gemäß einer weiteren bevorzugten Ausführungsform der Erfindung umfassen die Betätigungsmittel einen verschwenkbar gelagerten Kontaktarm, der mit dem Spaltrohr beim Einbringen in das Motorgehäuse in Kontakt bringbar und von diesem verschwenkbar ist, wobei der Kontaktarm rotatorisch entweder mittelbar über geeignete Getriebeglieder oder unmittelbar mit dem Sensor verbunden ist.

Eine besonders einfache Konstruktionsweise kann hierbei dadurch erreicht werden, daß der Kontaktarm drehfest mit dem Hebel verbunden ist, wobei für eine optimale Funktionsweise ein Winkel zwischen 20° und 120°, vorzugsweise zwischen 40° und 50°, zwischen dem Kontaktarm und dem Hebel vorgeschlagen wird. Auf fertigungstechnisch besonders einfache Weise kann der Kontaktarm dabei einstückig mit dem Hebel ausgebildet, insbesondere aus Kunststoff, gespritzt sein.

Besonders vorteilhaft ist es, wenn der Sensor formschlüssig und/oder kraftschlüssig in der zweiten Position arretierbar ist. Durch eine Feststellung des Sensors in seiner Betriebsposition kann eine besonders sichere Funktionsweise dauerhaft erreicht werden.

Insbesondere bei der Ausführungsform mit einem Kontaktarm als Betätigungsmittel kann der Kontaktarm hierbei vorzugsweise durch das Spaltrohr formschlüssig in einer Position arretiert werden, in der der Sensor in seiner zweiten Position gehalten ist. Auf diese Weise wird der Sensor mittelbar in seiner Betriebsposition gesichert.

Besonders vorteilhaft ist es ferner, wenn ein elastisches Federelement vorgesehen ist, durch das der Sensor in der zweiten Position kraftschlüssig auf Druck oder Zug beaufschlagbar ist. Auf diese Weise kann eine besonders hohe Funktionssicherheit gewährleistet werden, da der Sensor auch dann in Anlage an dem Spaltrohr bleibt, wenn sich die den Sensor lagernden Elemente aufgrund von Temperaturänderungen verformen.

Vorzugsweise kann das Federelement hierbei durch eine gebogene Blattfeder oder eine Schenkelfeder gebildet sein, deren eines Ende an dem Halteelement oder einem fest hiermit verbundenen Teil befestigt ist und deren anderes Ende den Sensor ggf. über den Hebel gegen das Spaltrohr drückt.

Um zu verhindern, daß sich der Sensor unbeabsichtigt von der Montageposition in die Betriebsposition bewegt, wird vorgeschlagen, daß lösbare Sicherungsmittel vorgesehen sind, durch die der Sensor formschlüssig und/oder kraftschlüssig in der ersten Position gehalten ist. Auf besonders einfache Weise können die Sicherungsmittel hierbei dadurch gebildet sein, daß mindestens ein Vorsprung an dem Hebel oder an den Betätigungsmitteln vorgesehen ist, der vor dem Einbringen des Spaltrohres in das Motorgehäuse an einem Haltebereich eines feststehenden Elements, insbesondere des Halteelements, anliegt. Zum Lösen der Sicherungsmittel wird dazu weiterhin vorgeschlagen, daß der Vorsprung beim Einbringen des Spaltrohres in das Motorgehäuse durch die Bewegung des Hebels oder der Betätigungsmittel entweder abtrennbar ist oder kraftschlüssig an dem feststehenden Element vorbeibewegt wird oder eine Sollbruchstelle des Haltebereichs durchtrennt.

Im Sinne der Erfindung kann der Sensor ein induktiver oder kapazitiver oder ohmscher Sensor sein. Bevorzugt wird eine Ausführungsform, bei der der Sensor ein Temperatursensor zur Erfassung der Temperatur der geförderten Flüssigkeit oder ein Hall-Sensor zur Erfassung der Rotationsgeschwindigkeit des Motors ist.

Ferner ist Gegenstand der Erfindung ein Verfahren zur Montage einer Spaltrohrpumpe der vorangehend beschriebenen Art, bei dem die Teile der Spaltrohrpumpe in axialer Richtung aneinandergefügt werden und wobei das Verfahren die folgenden Montageschritte umfaßt:

Zunächst wird das Halteelement in das Motorgehäuse auf eine ggf. bereits eingesetzte Motorelektronik eingebracht, wobei sich der Sensor in der ersten Position befindet. Anschließend wird das Spaltrohr in das Motorgehäuse eingebracht, wobei der Stator bereits auf dem Spaltrohr angeordnet sein kann. Danach wird der Sensor vor der ersten in die zweite Position verschwenkt und/oder verschoben. Abschließend werden die übrigen Teile, insbesondere die Motorwelle mit dem Rotor, der Lagerschild, das Pumpenrad und das Pumpengehäuse montiert.

Bei einer besonders bevorzugten Variante des Montageverfahrens werden die folgenden Verfahrensschritte ausgeführt:

Zunächst wird das Halteelement mit dem daran gelagerten Sensor auf eine in einer sogenannten Kammerblockkappe aufgenommene Platine aufgebracht, wobei sich der Sensor in der ersten Position befindet. Anschließend wird die Kammerblockkappe auf den Stator montiert. Dann wird der Stator zusammen mit der Kammerblockkappe in das Motorgehäuse eingepresst. Der Sensor befindet sich dabei immer noch in der ersten Position. Danach wird das Spaltrohr bzw. der Spalttopf in das Motorgehäuse eingebracht, das bzw. der beim Einsetzen den erfindungsgemäßen Mechanismus auslöst und den Sensor in die zweite Position bewegt.

Besonders vorteilhaft ist es bei diesen Montageverfahren, wenn der Sensor über Betätigungsmittel beim Einbringen des Spaltrohres, insbesondere kurz vor Erreichen der endgültigen Position des Spaltrohres, von der ersten in die zweite Position bewegt wird.

Weitere Vorteile und Merkmale der Erfindung ergeben sich aus der nachfolgenden Beschreibung zu den in den Zeichnungen dargestellten Ausführungsbeispielen.

Es zeigen:
- Figur 1:: Querschnitt durch eine erfindungsgemäße Spaltrohrpumpe,
- Figur 2:: vergrößerte Darstellung der Einzelheit E aus Fig. 1, wobei sich der Sensor in der ersten Position befindet,
- Figur 3:: Darstellung gemäß Fig. 2, wobei sich der Sensor in der zweiten Position befindet und
- Figur 4:: Darstellung einer alternativen Ausführungsform, wobei sich der Sensor in der zweiten Position befindet.

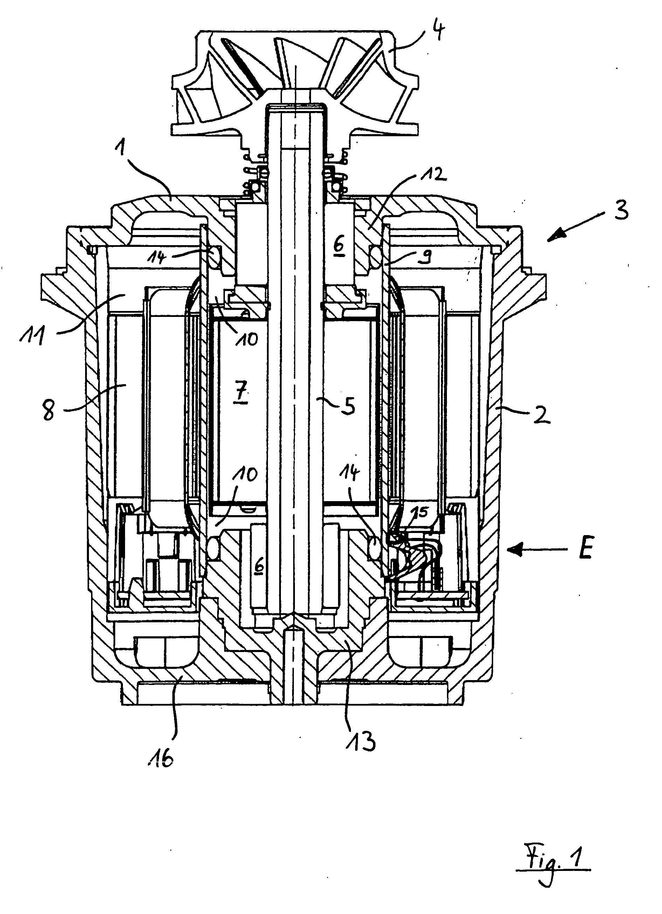

In Fig. 1 ist die Spaltrohrpumpe ohne Pumpengehäuse dargestellt, welches sich an den oberen Deckel 1 des Motorgehäuses 2 des Motors 3 anschließt und das Pumpenlaufrad 4 aufnimmt. Das Pumpenlaufrad 4 ist drehfest auf der Motorwelle 5 angeordnet, die an ihrem unteren freien Ende und im Bereich des Deckels 1 in Lagern 6 gelagert ist.

Zwischen den beiden Lagern 6 ist der Rotor 7 drehfest auf der Motorwelle 5 angeordnet, der radial außerhalb von den Wicklungen des ringförmigen Stators 8 umgeben ist. In dem Zwischenraum zwischen dem Rotor 7 und dem Stator 8 befindet sich ein Spaltrohr 9, das auf an sich bekannte Weise den im Inneren des Spaltrohres 9 befindlichen und von der geförderten Flüssigkeit durchströmten Naßraum 10 von dem außerhalb des Spaltrohres 9 befindlichen Statorraum 11 trennt. Der Rotor 7 läuft hierbei als Naßläufer in der im Inneren des Spaltrohres 9 befindlichen Flüssigkeit um, wobei das Spaltrohr 9 an seinem oberen Ende gegenüber dem am Deckel 1 ausgebildeten Lagerträger 12 und an seinem unteren Ende gegenüber einem das Spaltrohr 9 abschließenden und das untere Lager 6 tragenden Spaltrohrdeckel 13 jeweils über einen O-Ring 14 abgedichtet ist.

Am unteren Ende des Spaltrohres 9 befindet sich an dem mit E gekennzeichneten Bereich ein Sensor 15 zur Erfassung der Temperatur der innerhalb des Spaltrohres 9 befindlichen geförderten Flüssigkeit. In anderen Ausführungsbeispielen können auch andere Sensoren, insbesondere Sensoren zur Ermittlung der Rotorlage, der Rotordrehzahl und/oder der Rotordrehrichtung oder ein Feuchtigkeitssensor vorgesehen sein. Die von dem in Kontakt mit der Außenwandung des Spaltrohres 9 befindlichen Sensor 15 ermittelten Betriebsparameter werden zur Steuerung oder Regelung der Spaltrohrpumpe verwendet. Insbesondere im Bereich von Heizungsanlagen kann die Temperatur der geförderten Flüssigkeit hierzu von entscheidender Bedeutung sein.

Das Motorgehäuse 2 ist an der der Pumpe abgewandten unteren Stirnseite durch einen Boden 16 verschlossen, der einstückig mit dem Motorgehäuse 2 gegossen ist. Daher müssen alle Bestandteile des Motors 3 von oben axial in das Motorgehäuse 2 eingefügt werden, welches abschließend durch Einsetzen des Deckels 1 auch an der oberen Stirnseite abgeschlossen wird. Insbesondere wenn der Stator 8 zusammen mit dem Spaltrohr 9 in das Motorgehäuse 2 eingebracht wird, ist es schwierig oder sogar unmöglich, den Sensor 15 nach dem Einsetzen des Spaltrohres 9 in seine Betriebsposition B zu bringen, in der er an der Außenwandung des Spaltrohres 9 anliegt. Damit eine sichere Funktionsweise des Sensors 15 gewährleistet ist, sollten reibschlüssige Bewegungen an der Kontaktfläche des Sensors 15 vermieden oder allenfalls auf ein geringstmögliches Maß beschränkt werden.

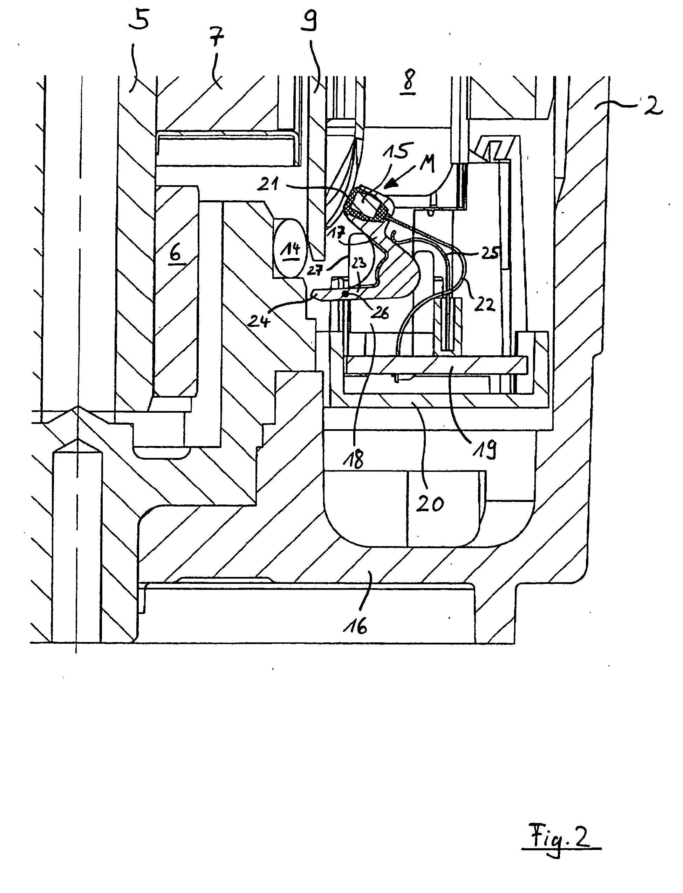

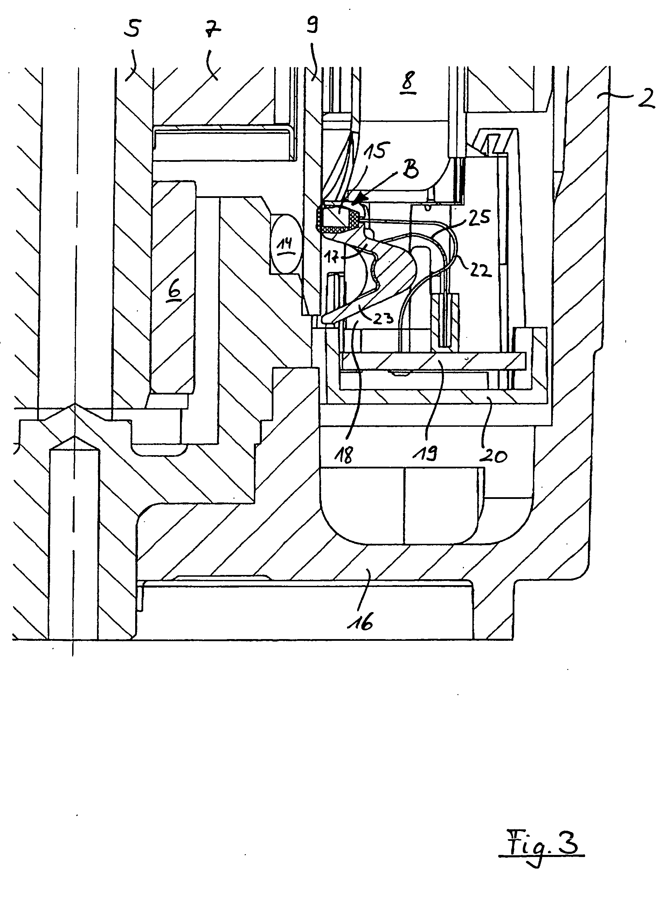

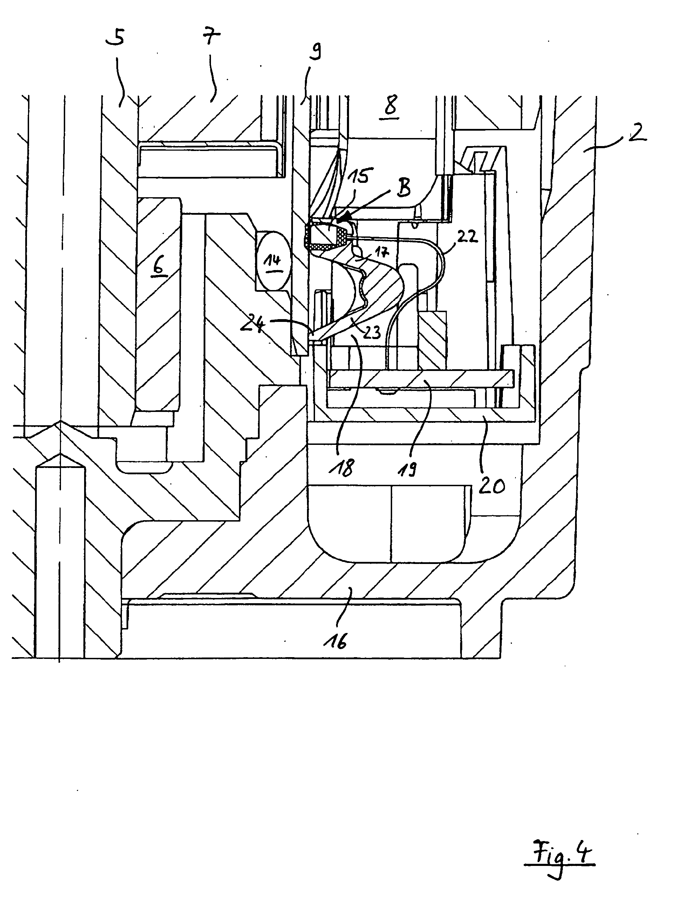

Deshalb ist der Sensor 15 erfindungsgemäß über einen Hebel 17 schwenkbar an einem Halteelement 18 gelagert, wobei er aus einer ersten Position, der sogenannten Montageposition M in eine zweite Position, die sogenannte Betriebsposition B bewegt werden kann. Der Hebel 17 kann um eine senkrecht zur Zeichnungsebene verlaufende Schwenkachse geschwenkt werden, so daß der Sensor 15 in der radialen Zeichnungsebene von außen gegen die Außenwandung des Spaltrohres 9 bewegt wird. In der Montageposition M hat der Sensor 15 in radialer Richtung einen deutlichen Abstand zum Spaltrohr 9, so daß eine axiale Bewegung des Spaltrohres 9 beim Einbringen in das Motorgehäuse 2 den Sensor 15 bzw. die Vergußmasse 19 in dieser Position M nicht beschädigen kann (Figur 2). In der Betriebsposition B liegt der Sensor 15 an dem Spaltrohr 9 in einem Bereich an, der oberhalb des O-Rings 14 innenseitig Kontakt zu der geförderten Flüssigkeit hat (Figuren 3 und 4).

Das Halteelement 18 ist an einer Leiterplatte 19 befestigt, die in einer Verteilerkappe 20 aufgenommen ist, die als Schnittstelle zwischen den einzelnen Wicklungen des Stators 8 und der Motorelektronik vorgesehen ist. Zur Befestigung an dem Hebel 17 ist der Sensor 15 von einer thermisch leitenden Vergußmasse 21 umgeben, die außerdem auch eine zusätzliche Schutzfunktion für den Sensor 15 erfüllt. Die Anschlußkabel 22 des Sensors 15 sind in Form eines Bogens locker zur Leiterplatte 19 geführt, so daß sie die Schwenkbewegung des Hebels 17 nicht behindern.

Damit der Sensor 15 beim Montieren bzw. Einbringen des Spaltrohres 9 in das Motorgehäuse 2 automatisch von der Montageposition M in die Betriebsposition B bewegt wird, ist der Hebel 17 drehfest mit einem Kontaktarm 23 verbunden, dessen freies Ende 24 radial im Bereich der Wandung des Spaltrohres 9 liegt. Der Kontaktarm 23 ist hierbei einstückig mit dem Hebel 17 unter einem Winkel von 45° in Form einer Wippe aus Kunststoff gespritzt.

Beim Einbringen des Spaltrohres 9 in das Motorgehäuse 2 drückt das untere Ende des Spaltrohres 9 mechanisch auf das freie Ende 24 des Kontaktarmes 23, der dadurch nach unten verschwenkt wird. Dabei wird gleichzeitig der Hebel 17 um den gleichen Winkel nach innen verschwenkt, wodurch der Sensor 15 in Anlage an das Spaltrohr 9 gebracht wird. Der Kontaktarm 23 dient somit als Betätigungsmittel für die automatische Ausführung der Schwenkbewegung des Sensors 15 von der ersten Position M in die zweite Position B.

Bei den in den Figuren 2 und 3 gezeigten Ausführungsbeispielen ist ferner eine gebogene Metallfeder 25 vorgesehen, die auf den Hebel 17 elastisch in Richtung zur Betriebsposition des Sensors 15 einwirkt. Die Feder 25 ist dabei mit einem Ende an dem Halteelement 18 befestigt, während ihr freies Ende auf den Hebel 17 drückt und den Sensor 15 auch dann sicher in Anlage gegen das Spaltrohr 9 hält, wenn sich die aus Kunststoff gefertigten Teile, insbesondere das Halteelement 18 oder der Hebel 17, bei einer Erwärmung der geförderten Flüssigkeit verformen. Der Sensor 15 ist dabei kraftschlüssig in der zweiten Position B arretiert.

Bei der in Figur 4 dargestellten Alternative ist der Sensor 15 formschlüssig in der zweiten Position B arretiert. Hierbei wird das freie Ende 24 des Kontaktarms 23 dauerhaft durch das Spaltrohr 9 nach außen gehalten, wobei der Sensor 15 ebenfalls dauerhaft an der Außenwandung des Spaltrohres 9 anliegt und somit in seiner Betriebsposition B gesichert ist.

Um zu verhindern, daß sich der Sensor 15 schon vor der gewünschten Schwenkbewegung unbeabsichtigt von der Montageposition M in die Betriebsposition B bewegt, sind an beiden seitlichen Flächen des Kontaktarms 23 als lösbare und formschlüssig wirkende Sicherungsmittel seitlich leicht hervorstehende Vorsprünge 26 angeordnet, die an der Vorderkante 27 des Halteelementes 18 anliegen, wenn sich der Sensor 15 in seiner Montageposition M befindet. Beim Einbringen des Spaltrohres 9 in das Motorgehäuse 2 werden die kleinen Vorsprünge 26 bei der nach unten gerichteten Schwenkbewegung des Kontaktarms 23 an der Vorderkante 27 abgeschert und die Sicherungsmittel auf diese Weise gelöst.

Die erfindungsgemäße Lösung kann insbesondere bei kleinbauenden Pumpen Vorteile bei der Montage bringen, die beispielsweise an Heizkörpern eingesetzt werden können. Vorzugsweise kann es sich dabei auch um Spalttopfpumpen mit einem unten geschlossen ausgebildeten Spalttopf handeln.

## Patentansprüche

1. Spaltrohrpumpe mit einem die Pumpe antreibenden Elektromotor (3), bei dem ein Spaltrohr (9), insbesondere ein Spalttopf, den Naßraum (10) mit dem in der geförderten Flüssigkeit umlaufenden Rotor (7) von dem den Stator (8) enthaltenden trockenen Statorraum (11) trennt, wobei in dem Statorraum (11) an dem Spaltrohr (9) ein Sensor (15) zur Erfassung von Betriebsparametern der Pumpe, insbesondere zur Erfassung der Temperatur der geförderten Flüssigkeit vorgesehen ist,
**dadurch gekennzeichnet,**
**daß** in dem Statorraum (11) ein Halteelement (18) vorgesehen ist, an dem der Sensor (15) zwischen zwei Positionen (M, B) verschwenkbar und/oder verschiebbar gelagert ist, wobei in einer ersten Position (M) ein Abstand zwischen dem Sensor (15) und dem Spaltrohr (9) vorgesehen ist und in der zweiten Position (B) der Sensor (15) an dem Spaltrohr (9) anliegt, und wobei Betätigungsmittel (23) vorgesehen sind, durch die der Sensor (15) beim Einbringen des Spaltrohres (9) in das Motorgehäuse (2) von der ersten (M) in die zweite (B) Position bewegbar ist.

2. Spaltrohrpumpe nach Anspruch 1, **dadurch gekennzeichnet, daß** der Sensor (15) an einem Hebel (17) angeordnet, vorzugsweise verklebt oder mittels einer Vergußmasse (21) vergossen ist, der schwenkbar an dem Halteelement (18) gelagert ist.

3. Spaltrohrpumpe nach Anspruch 1 oder 2, **dadurch gekennzeichnet, daß** der Sensor (15) zumindest im wesentlichen in einer die Motorachse enthaltenden radialen Ebene von außen gegen die Außenwandung des Spaltrohrs (9) bewegbar ist.

4. Spaltrohrpumpe nach einem der vorherigen Ansprüche, **dadurch gekennzeichnet, daß** der Sensor (15) an der der Pumpe abgewandten Stirnseite des Stators (8) zwischen den Statorwicklungen und der Motorelektronik oder einer Schnittstelle zur Motorelektronik angeordnet ist.

5. Spaltrohrpumpe nach einem der vorherigen Ansprüche, **dadurch gekennzeichnet, daß** das Halteelement (18) an einer Verteilerkappe (20), insbesondere an einer in der Verteilerkappe (20) aufgenommenen Leiterplatte (19) angeordnet ist, die als Trennung bzw. Schnittstelle zwischen den Statorwicklungen und der Motorelektronik vorgesehen ist.

6. Spaltrohrpumpe nach einem der vorherigen Ansprüche, **dadurch gekennzeichnet, daß** die Betätigungsmittel ein im Bereich der Wandung des Spaltrohres (9) verschiebbar oder verschwenkbar gelagertes Kontaktelement (23) umfassen, das mit dem Spaltrohr (9) beim Einbringen in das Motorgehäuse (2) in Kontakt bringbar und von diesem verschiebbar bzw. verschwenkbar ist, wobei Übertragungsmittel zur Übertragung der Bewegung des Kontaktelementes (23) auf eine Bewegung des Sensors (15) vorgesehen sind.

7. Spaltrohrpumpe nach Anspruch 6, **dadurch gekennzeichnet, daß** die Übertragungsmittel formschlüssig und/oder kraftschlüssig wirken und insbesondere Verbindungshebel oder Zugmittel oder Zahnräder und/oder Zahnstangen umfassen.

8. Spaltrohrpumpe nach einem der vorherigen Ansprüche, **dadurch gekennzeichnet, daß** die Betätigungsmittel einen verschwenkbar gelagerten Kontaktarm (23) umfassen, der mit dem Spaltrohr (9) beim Einbringen in das Motorgehäuse (2) in Kontakt bringbar und von diesem verschwenkbar ist, wobei der Kontaktarm (23) rotatorisch mittelbar oder unmittelbar mit dem Sensor (15) verbunden ist.

9. Spaltrohrpumpe nach den Ansprüchen 2 und 8, **dadurch gekennzeichnet, daß** der Kontaktarm (23) unter einem Winkel zwischen 20° und 120°, vorzugsweise zwischen 40° und 50° drehfest mit dem Hebel (17) verbunden ist.

10. Spaltrohrpumpe nach Anspruch 9, **dadurch gekennzeichnet, daß** der Kontaktarm (23) einstückig mit dem Hebel (17) ausgebildet ist.

11. Spaltrohrpumpe nach einem der vorherigen Ansprüche, **dadurch gekennzeichnet, daß** der Sensor (15) formschlüssig und/oder kraftschlüssig in der zweiten Position (B) arretierbar ist.

12. Spaltrohrpumpe nach Anspruch 11 und einem der Ansprüche 8 bis 10, **dadurch gekennzeichnet, daß** der Kontaktarm (23) durch das Spaltrohr (9) formschlüssig in einer Position arretierbar ist, in der der Sensor (15) in seiner zweiten Position (B) gehalten ist.

13. Spaltrohrpumpe nach Anspruch 11, **dadurch gekennzeichnet, daß** ein elastisches Federelement (25) vorgesehen ist, durch das der Sensor (15) in der zweiten Position (B) kraftschlüssig auf Druck oder Zug beaufschlagbar ist.

14. Spaltrohrpumpe nach Anspruch 13, **dadurch gekennzeichnet, daß** das Federelement (25) durch eine gebogenen Blattfeder oder eine Schenkelfeder gebildet ist, deren eines Ende an dem Halteelement (18) oder einem fest hiermit verbundenen Teil befestigt ist und deren anderes Ende den Sensor (15), gegebenenfalls über den Hebel (17), gegen das Spaltrohr (9) drückt.

15. Spaltrohrpumpe nach einem der vorherigen Ansprüche, **dadurch gekennzeichnet, daß** lösbare Sicherungsmittel (26) vorgesehen sind, durch die der Sensor (15) formschlüssig und/oder kraftschlüssig in der ersten Position (M) gehalten ist.

16. Spaltrohrpumpe nach Anspruch 15, **dadurch gekennzeichnet, daß** die Sicherungsmittel mindestens einen Vorsprung (26) an dem Hebel (17) oder an den Betätigungsmitteln (23) umfassen, der vor dem Einbringen des Spaltrohres (9) in das Motorgehäuse (2) an einem Haltebereich (27) eines feststehenden Elementes, insbesondere des Halteelements (18) anliegt.

17. Spaltrohrpumpe nach Anspruch 16, **dadurch gekennzeichnet, daß** der Vorsprung (26) beim Einbringen des Spaltrohres (9) in das Motorgehäuse (2) durch die Bewegung des Hebels (17) oder der Betätigungsmittel (23) entweder abtrennbar ist oder kraftschlüssig an dem feststehenden Element vorbei bewegbar ist oder eine Sollbruchstelle des Haltebereichs (27) durchtrennt.

18. Spaltrohrpumpe nach einem der vorherigen Ansprüche, **dadurch gekennzeichnet, daß** der Sensor (15) ein induktiver, kapazitiver oder ohmscher Sensor ist.

19. Spaltrohrpumpe nach Anspruch 18, **dadurch gekennzeichnet, daß** der Sensor (15) ein Temperatursensor zur Erfassung der Temperatur der geförderten Flüssigkeit oder ein Hallsensor zur Erfassung der Rotationsgeschwindigkeit des Motors (3) ist.

20. Verfahren zur Montage einer Spaltrohrpumpe nach einem der Ansprüche 1 bis 19, bei der die Teile der Spaltrohrpumpe insbesondere in axialer Richtung aneinander gefügt werden, **gekennzeichnet durch** folgende Verfahrenschritte:
- zunächst wird der Sensor (15) mit dem Halteelement (18) auf eine Platine (19) aufgebracht, die sich in einer Kammerblockkappe (20) befindet, wobei sich der Sensor (15) in der ersten Position (M) befindet,
- anschließend wird die Kammerblockkappe (20) auf den Stator (8) montiert,
- dann wird der Stator zusammen mit der Kammerblockkappe (20) in das Motorgehäuse (2) eingebracht, wobei sich der Sensor (15) in der ersten Position (M) befindet,
- danach wird das Spaltrohr (9) in das Motorgehäuse (2) eingebracht, wobei der Sensor (15) von der ersten (M) in die zweite (B) Position verschwenkt und/oder verschoben wird,
- abschließend werden die übrigen Teile, insbesondere die Motorwelle (5), der Lagerschild oder Motorgehäusedeckel (1), das Pumpenlaufrad (4) und das Pumpengehäuse montiert.

21. Verfahren zur Montage einer Spaltrohrpumpe nach einem der Ansprüche 1 bis 19, bei der die Teile der Spaltrohrpumpe insbesondere in axialer Richtung aneinander gefügt werden, **gekennzeichnet durch** folgende Verfahrenschritte:
- zunächst wird das Halteelement (18) in das Motorgehäuse (2) auf eine gegebenenfalls bereits eingesetzte Motorelektronik eingebracht, wobei sich der Sensor (15) in der ersten Position (M) befindet,
- anschließend wird das Spaltrohr (9) in das Motorgehäuse (2) eingebracht, wobei vorzugsweise der Stator bereits auf dem Spaltrohr (9) angeordnet ist, wobei der Sensor (15) von der ersten (M) in die zweite (B) Position verschwenkt und/oder verschoben wird,
- abschließend werden die übrigen Teile, insbesondere die Motorwelle (5), der Lagerschild oder Motorgehäusedeckel (1), das Pumpenlaufrad (4) und das Pumpengehäuse montiert.

22. Verfahren nach Anspruch 20 oder 21, **dadurch gekennzeichnet, daß** der Sensor (15) mittels Betätigungsmitteln (23) beim Einbringen des Spaltrohres (9) in das Motorgehäuse (2), insbesondere kurz vor Erreichen der endgültigen Position des Spaltrohres (9) von der ersten (M) in die zweite (B) Position bewegt wird.

## Claims

1. Canned pump with an electric motor (3) driving the pump, in which a can (9), particularly a containment shell, separates the wet area (10) with the rotor (7) circulating in the conveyed liquid from the dry stator area (11) containing the stator (8), in which a sensor (15) for detecting the operating parameters of the pump, particularly for detecting the temperature of the liquid being conveyed, is provided in the stator area (11) on the can (9),
**characterised in that**
in the stator area (11) a holding element (18) is provided, on which the sensor (15) is mounted so that it can be swivelled and/or pushed between two positions (M, B), in which in a first position (M) a distance is provided between the sensor (15) and the can (9) and in the second position (B) the sensor (15) is adjacent to the can (9) and in which means of operation (23) are provided, through which the sensor (15) can be moved from the first (M) into the second (B) position, when putting the can (9) into the motor housing (2).

2. Canned pump according to claim 1, **characterised in that** the sensor (15) is arranged on a lever (17), preferably bonded or moulded by means of a moulding compound (21), which is mounted so that it can be swivelled on the holding element (18).

3. Canned pump according to claim 1 or 2, **characterised in that** the sensor (15) can be moved from outside against the outside wall of the can (9) at least essentially on a radial level containing the motor shaft.

4. Canned pump according to one of the previous claims, **characterised in that** the sensor (15) is arranged on the front face of the stator (8) turned away from the pump between the stator windings and the motor electronics or an interface with the motor electronics.

5. Canned pump according to one of the previous claims, **characterised in that** the holding element (18) is arranged on a distributor cap (20), particularly on a printed circuit board (19) housed in the distributor cap (10), which is provided as separation or interface between the stator windings and the motor electronics.

6. Canned pump according to one of the previous claims, **characterised in that** the means of operation comprise a contact element (23) mounted so that it can be pushed or swivelled in the area of the wall of the can (9), which can be brought into contact with the can (9), when putting it into the motor housing (2), and can be pushed or swivelled from there, in which means of transfer are provided for transferring the movement of the contact element (23) to a movement of the sensor (15).

7. Canned pump according to claim 6, **characterised in that** the means of transfer act positively and/or non-positively and comprise connection levers or traction mechanics or toothed wheels and/or toothed racks in particular.

8. Canned pump according to one of the previous claims, **characterised in that** the means of operation comprise a contact arm (23) mounted so that it can be swivelled, which can be brought into contact with the can (9), when it is put into the motor housing (2), and can be swivelled from there, in which the contact arm (23) is connected directly or indirectly with the sensor (15) in rotation.

9. Canned pump according to claims 2 and 8, **characterised in that** the contact arm (23) is connected to the lever (17) so that it cannot turn at an angle of between 20° and 120 °, preferably between 40° and 50°.

10. Canned pump according to claim 9, **characterised in that** the contact arm (23) is made in one piece with the lever (17).

11. Canned pump according to one of the previous claims, **characterised in that** the sensor (15) can be locked positively and/or non-positively in the second position (B).

12. Canned pump according to claim 11 and one of claims 8 to 10,
**characterised in that** the contact arm (23) can be locked positively in a position by the can (9), in which the sensor (15) is held in its second position (B).

13. Canned pump according to claim 11, **characterised in that** an elastic spring element (25) is provided, through which the sensor (15) can be subject to pressure or traction non-positively in the second position (B).

14. Canned pump according to claim 13, **characterised in that** the spring element (25) is formed by a bent leaf spring or a leg spring, one end of which is fastened to the holding element (18) or a part connected firmly to it and the other end of which presses the sensor (15), if necessary through the lever (17), against the can (9).

15. Canned pump according to one of the previous claims, **characterised in that** detachable means of securing (26) are provided, through which the sensor (15) is held positively and/or non-positively in the first position (M).

16. Canned pump according to claim 15, **characterised in that** the means of securing comprise at least one projection (26) on the lever (17) or on the means of operation (23), which is adjacent to a holding area (27) of a fixed element, particularly the holding area (18), before the can (9) is put into the motor housing (2).

17. Canned pump according to claim 16, **characterised in that** the projection (26) either can be separated through the movement of the lever (17) or the means of operation (23) or can be moved past non-positively on the fixed element or cuts in two a breaking point of the holding area (27), when the can (9) is put into the motor housing (2).

18. Canned pump according to one of the previous claims, **characterised in that** the sensor (15) is an inductive, capacitive or resistive sensor.

19. Canned pump according to claim 18, **characterised in that** the sensor (15) is a temperature sensor for detecting the temperature of the conveyed liquid or an acoustic sensor for detecting the speed of rotation of the motor (3).

20. Method for assembling a canned pump according to one of claims 1 to 19, in which the parts of the canned pump are joined together, particularly in the axial direction, **characterised by** the following stages of the process:
- first the sensor (15) is put on a board (19) with the holding element (18), which is in a chamber block cap (20), in which the sensor (15) is in the first position (M),
- then the chamber block cap (20) is assembled on the stator (8),
- then the stator is put into the motor housing (2) together with the chamber block cap (20), in which the sensor (15) is in the first position (M),
- then the can (9) is put into the motor housing (2), in which the sensor (15) is pushed and/or swivelled from the first (M) into the second (B) position.
- finally the other parts, particularly the motor shaft (5), the bearing plate or motor housing cover (1), the impeller (4) and the pump housing are assembled.

21. Method for assembling a canned pump according to one of claims 1 to 19, in which the parts of the canned pump are joined together, particularly in the axial direction, **characterised by** the following stages of the process:
- first the holding element (18) is put into the motor housing (2) onto motor electronics, which have already been installed if necessary, in which the sensor (15) is in the first position (M),
- then the can (9) is put into the motor housing (2), in which preferably the stator is already arranged on the can (9), in which the sensor (15) is pushed and/or swivelled from the first (M) into the second (B) position
- then the other parts, particularly the motor shaft (5), the bearing plate or motor housing cover (1), the impeller (4) and the pump housing are assembled.

22. Method according to claim 20 or 21, **characterised in that** the sensor (15) is moved from the first (M) position into the second (B) position by means of means of operation (23), when the can (9) is put into the motor housing (2), particularly shortly before the final position of the can (9) is reached.

## Revendications

1. Electropompe à stator chemisé comprenant un moteur électrique (3) entraînant la pompe, dans lequel une chemise (9), en particulier un pot d'entrefer, sépare l'espace humide (10) avec le rotor (7) tournant dans le liquide refoulé de l'espace stator (11) sec comportant le stator (8), un capteur (15) étant prévu dans l'espace stator (11) sur la chemise (9) pour détecter des paramètres de fonctionnement de la pompe, en particulier pour détecter la température du liquide refoulé, **caractérisée en ce qu'**il est prévu dans l'espace stator (11) un élément de retenue (18), sur lequel est monté le capteur (15) avec une possibilité de pivotement et/ou de déplacement entre deux positions (M, B), un écartement entre le capteur (15) et la chemise (9) étant prévu dans une première position (M) et le capteur (15) s'appliquant sur la chemise (9) dans la seconde position (B), et des moyens d'actionnement (23) étant prévus, par lesquels le capteur (15), lors de l'introduction de la chemise (9) dans le carter moteur (2), peut être déplacé de la première (M) dans la seconde (B) position.

2. Electropompe à stator chemisé suivant la revendication 1, **caractérisée en ce que** le capteur (15) est disposé, de préférence collé ou coulé au moyen d'une masse de scellement (21), sur un levier (17), qui est monté pivotant sur l'élément de retenue (18).

3. Electropompe à stator chemisé suivant l'une des revendications 1 et 2, **caractérisée en ce que** le capteur (15) peut être déplacé de l'extérieur contre la paroi extérieure de la chemise (9) au moins essentiellement dans un plan radial comportant l'axe du moteur.

4. Electropompe à stator chemisé suivant l'une des revendications précédentes, **caractérisée en ce que** le capteur (15) est disposé sur le côté frontal du stator (8), opposé à la pompe, entre les enroulements du stator et l'électronique du moteur ou une interface avec l'électronique du moteur.

5. Electropompe à stator chemisé suivant l'une des revendications précédentes, **caractérisée en ce que** l'élément de retenue (18) est disposé sur un capuchon de distribution (20), en particulier sur une carte imprimée (19) logée dans le capuchon de distribution (20), lequel capuchon est prévu en tant que séparation ou interface entre les enroulements du stator et l'électronique du moteur.

6. Electropompe à stator chemisé suivant l'une des revendications précédentes, **caractérisée en ce que** les moyens d'actionnement comprennent un élément de contact (23) monté avec une possibilité de déplacement ou de pivotement dans la zone de la paroi de la chemise (9), lequel élément peut être amené au contact de la chemise (9) lors de l'introduction dans le carter moteur (2) et être animé d'un mouvement de pivotement ou déplacé de cette dernière, des moyens de transmission étant prévus pour transmettre le déplacement de l'élément de contact (23) à un déplacement du capteur (15).

7. Electropompe à stator chemisé suivant la revendication 6, **caractérisée en ce que** les moyens de transmission agissent par coopération de forme et/ou force d'adhérence et comprennent en particulier des leviers de jonction ou des moyens de traction ou des pignons et/ou des crémaillères.

8. Electropompe à stator chemisé suivant l'une des revendications précédentes, **caractérisée en ce que** les moyens d'actionnement comprennent un bras de contact (23) monté pivotant, qui peut être amené au contact de la chemise (9) lors de l'introduction dans le carter moteur (2) et pivoter à l'écart de cette dernière, le bras de contact (23) étant relié en rotation, indirectement ou directement, au capteur (15).

9. Electropompe à stator chemisé suivant les revendications 2 et 8, **caractérisée en ce que** le bras de contact (23) est solidaire du levier (17) sous un angle compris entre 20° et 120°, de préférence entre 40° et 50°.

10. Electropompe à stator chemisé suivant la revendication 9, **caractérisée en ce que** le bras de contact (23) a une réalisation monobloc avec le levier (17).

11. Electropompe à stator chemisé suivant l'une des revendications précédentes, **caractérisée en ce que** le capteur (15) peut être bloqué par coopération de forme et/ou force d'adhérence dans la seconde position (B).

12. Electropompe à stator chemisé suivant la revendication 11 et l'une des revendications 8 à 10, **caractérisée en ce que** le bras de contact (23) peut être bloqué par coopération de forme par la chemise (9) dans une position, dans laquelle le capteur (15) est maintenu dans sa seconde position (B).

13. Electropompe à stator chemisé suivant la revendication 11, **caractérisée en ce qu'**il est prévu un élément à ressort (25) élastique, par lequel le capteur (15) peut être sollicité en pression ou traction par force d'adhérence dans la seconde position (B).

14. Electropompe à stator chemisé suivant la revendication 13, **caractérisée en ce que** l'élément à ressort (25) est formé par un ressort à lames plates plié ou par un ressort à branches, dont une extrémité est fixée sur l'élément de retenue (18) ou sur un élément assemblé fixement avec ce dernier, et dont l'autre extrémité presse le capteur (15), éventuellement par l'intermédiaire du levier (17), contre la chemise (9).

15. Electropompe à stator chemisé suivant l'une des revendications précédentes, **caractérisée en ce que** sont prévus des moyens de blocage amovibles (26), par lesquels le capteur (15) est maintenu par coopération de forme et/ou par force d'adhérence dans la première position (M).

16. Electropompe à stator chemisé suivant la revendication 15, **caractérisée en ce que** les moyens de blocage comprennent au moins une saillie (26) sur le levier (17) ou sur les moyens d'actionnement (23), laquelle saillie s'applique, avant l'introduction de la chemise (9) dans le carter moteur (2), sur une zone de retenue (27) d'un élément fixe, en particulier de l'élément de retenue (18).

17. Electropompe à stator chemisé suivant la revendication 16, **caractérisée en ce que** la saillie (26), lors de l'introduction de la chemise (9) dans le carter moteur (2), peut être soit séparée, soit déplacée par force d'adhérence devant l'élément fixe, par le déplacement du levier (17) ou des moyens d'actionnement (23), ou sectionne un point destiné à la rupture de la zone de retenue (27).

18. Electropompe à stator chemisé suivant l'une des revendications précédentes, **caractérisée en ce que** le capteur (15) est un capteur inductif, capacitif ou ohmique.

19. Electropompe à stator chemisé suivant la revendication 18, **caractérisée en ce que** le capteur (15) est un capteur de température pour détecter la température du liquide refoulé ou un capteur à effet Hall pour détecter la vitesse de rotation du moteur (3).

20. Procédé de montage d'une électropompe à stator chemisé suivant l'une des revendications 1 à 19, dans laquelle les éléments de la pompe sont jointoyés, en particulier dans la direction axiale, **caractérisé par** les étapes de procédé suivantes :
- le capteur (15) avec l'élément de retenue (18) est d'abord appliqué sur une platine (19), qui se situe dans un capuchon bloc de chambre (20), le capteur (15) se situant alors dans la première position (M),
- le capuchon bloc de chambre (20) est ensuite monté sur le stator (8),
- puis le stator, avec le capuchon bloc de chambre (20), est introduit dans le carter moteur (2), le capteur (15) se situant alors dans la première position (M),
- la chemise (9) est ensuite introduite dans le carter moteur (2), le capteur (15) pivotant alors et/ou étant déplacé de la première (M) dans la seconde (B) position,
- les éléments restants, en particulier l'arbre (5) du moteur, le flasque ou le couvercle (1) du carter moteur, la roue mobile de pompe (4) et le corps de pompe sont enfin montés.

21. Procédé de montage d'une électropompe à stator chemisé suivant l'une des revendications 1 à 19, dans laquelle les éléments de la pompe sont mutuellement jointoyés, en particulier dans la direction axiale, **caractérisé par** les étapes de procédé suivantes:
- l'élément de retenue (18) est d'abord introduit dans le carter moteur (2) sur une électronique de moteur éventuellement déjà mise en place, le capteur (15) se situant alors dans la première position (M),
- la chemise (9) est ensuite introduite dans le carter moteur (2), le stator étant alors de préférence déjà disposé sur la chemise (9), le capteur (15) pivotant et/ou étant alors déplacé de la première (M) dans la seconde position (B),
- les éléments restants, en particulier l'arbre (5) du moteur, le flasque ou le couvercle (1) du carter moteur, la roue mobile de pompe (4) et le corps de pompe étant enfin montés.

22. Procédé suivant l'une des revendications 20 et 21, **caractérisé en ce que** le capteur (15)est déplacé de la première (M) dans la seconde position (B) à l'aide de moyens d'actionnement (23), lors de l'introduction de la chemise (9) dans le carter moteur (2), en particulier juste avant que la position définitive de la chemise (9) soit obtenue.
